# EUROPÄISCHE PATENTSCHRIFT

(11) **EP 2 656 897 B1**
(45) Veröffentlichungstag und Bekanntmachung des Hinweises auf die Patenterteilung: **17.09.2014**
(21) Anmeldenummer: 13164330.6
(22) Anmeldetag: 18.04.2013
(51) Int. Cl.: B01D 46/00, B01D 46/02, B01D 46/04

(54) **Verfahren und Vorrichtung zum Filtern von Partikeln aus Gasen**
Method and device for filtering particles from gases
Procédé et dispositif de filtration de particules à partir de gaz

(30) Priorität: 27.04.2012 DE 102012207139
(43) Veröffentlichungstag der Anmeldung: 30.10.2013
(73) Patentinhaber: Garant-Filter GmbH, 77933 Lahr (DE)
(72) Erfinder: Sommer, Marianne, 77830 Bühlertal (DE); Hupfer, Matthias, 77960 Seelbach (DE); Bayer, Mario, 77948 Friesenheim (DE)
(74) Vertreter: Lemcke, Brommer & Partner Patentanwälte Partnerschaft mbB

(56) Entgegenhaltungen:
- DE-A1- 2 242 659
- DE-A1- 2 405 344
- DE-A1- 3 026 595
- DE-U- 7 319 045
- DE-U1- 9 316 061
- DE-U1- 29 520 550
- US-A- 2 391 534
- US-A- 2 507 335
- US-A- 2 583 039
- US-A- 2 695 681
- US-A- 2 867 289
- US-A- 4 203 738

## Beschreibung

Die Erfindung betrifft eine Vorrichtung zum Filtern von Partikeln aus Gasen nach dem Oberbegriff des Anspruchs 1 sowie ein Verfahren nach dem Oberbegriff des Anspruchs 7.

Verfahren und Vorrichtungen der vorliegenden Art werden benötigt, um partikelführende Gase aus industriellen Prozessen zu reinigen, bevor diese in die Umgebung gelangen. Bei diesen Partikeln handelt es sich in aller Regel um Stäube, beispielsweise aus Schotterwerken, Industrieöfen, Verbrennungsanlagen, Holzverarbeitungsanlagen, Asphaltmischanlagen, Getreide- und Schüttgut-Umladestationen, Gießereien, Aluminium- bzw. Nichteisen-Herstellungsprozessen sowie sich daran anschließenden Prozessen und vielem mehr. All diesen Anwendungen ist gemeinsam, dass Volumenströme von partikelführenden Gasen im kontinuierlichen Betrieb gefiltert werden müssen.

Hierfür ist es seit langem bekannt, Filtervorrichtungen zu verwenden, die einen Rohgasraum zur Durchleitung des mit Partikeln beladenen Rohgasstroms und einen Reingasraum zum Aufnehmen eines Reingasstroms, der durch Filtern des Rohgasstroms entsteht, sowie eine Anzahl von zum Filtern des Rohgasstroms vorgesehenen Filterelementen enthalten. Der Rohgasstrom gelangt aufgrund einer Druckdifferenz über die Filterelemente in den Reingasraum, wobei die abzufilternden Partikel an den Filterelementen zurückgehalten werden. Hierdurch wächst eine Partikelschicht auf einer Rohgasseite der Filterelemente auf, so dass sich die Filterelemente mehr und mehr mit Partikeln beladen. Sie müssen daher von Zeit zu Zeit gereinigt werden, um zu verhindern, dass sie sich vollständig zusetzen und hierdurch ausfallen.

Solche Filtervorrichtungen weisen immer mehrere Filterelemente auf, so dass bedarfsweise oder regelmäßig mindestens ein Filterelement und höchstens ein Teil der Filterelemente gleichzeitig von der aufgewachsenen Partikelschicht, der meist "Staubkuchen" genannt wird, gereinigt werden kann, während die restlichen Filterelemente der Filteranlage in Betrieb bleiben, um den kontinuierlichen Filterprozess nicht unterbrechen zu müssen.

Es ist bekannt, die Filterelemente einer Filtervorrichtung der vorliegenden Art als Taschen, Schläuche oder Patronen auszubilden, die im Rohgasraum positioniert sind und an einer Trennwand zwischen dem Rohgasraum und dem Reingasraum in den Reingasraum münden, so dass die Außenfläche der Filterschläuche die Rohgasseite der Filterelemente bildet, während die Innenfläche der Filterschläuche die Reingasseite ist. Der Rohgasstrom durchströmt die Filterschläuche also von außen nach innen, so dass die abgefilterten Partikel auf der Schlauchaußenfläche zurückgehalten werden. Oft werden die Filtertaschen oder Filterschläuche matrixförmig in mehreren, als Zeilen und Spalten ausgebildeten Filterreihen angeordnet.

Zur bedarfsweisen oder regelmäßigen Reinigung der Filterelemente oder einzelner Filterreihen ist es bekannt, Spülvorrichtungen mit mindestens einer Spüldüse zu verwenden, die an die Reingasseite eines zu reinigenden ersten Filterelements bzw. einer ersten Filterreihe heranfahrbar ist und dort in einer Spülposition Spülgas, beispielsweise Druckluft, im Gegenstrom zur Strömungsrichtung des Rohgases durch das erste Filterelement bzw. die erste Filterreihe leitet. Das Filterelement, beispielsweise ein Filterschlauch, wird so in Gegenrichtung mit Spülgas durchströmt, so dass sich die außen anhaftende Partikelschicht, der Staubkuchen, von der Rohgasseite des Filterelements löst; das Filterelement wird gleichsam freigeblasen. Der abgelöste Staubkuchen fällt aufgrund der Schwerkraft nach unten und wird dort üblicherweise in einer Wanne aufgefangen sowie von dort entsorgt.

Problematisch ist hierbei, dass beim Reinigen eines Filterelements in der Umgebung dieses Filterelements durch das Freiblasen eine stark erhöhte Partikelkonzentration im Rohgasraum erzeugt wird. Da die restlichen Filterelemente, die nicht gerade gereinigt werden, weiter von Rohgas durchströmt werden, der Filterprozess also nicht für die Reinigung unterbrochen wird, können die vom gereinigten Filterelement abgelösten Partikel von den benachbarten Filterelementen unmittelbar angesaugt werden.

Um diese Problematik zu vermeiden, ist in der DE 27 38 942 C2 vorgeschlagen worden, bei einer Vorrichtung und einem Verfahren der vorliegenden Art die Reinigung der Filterelemente solcherart vorzunehmen, dass die unmittelbar benachbarten Filterelemente während des Reinigungsprozesses abgedeckt werden, so dass diese stillgesetzt sind und nicht weiter vom Rohgasstrom durchströmt werden. Dies bewirkt, dass die vom gereinigten Filterelement abgelösten Partikel von den benachbarten abgedeckten Filterelementen nicht angesaugt werden, sondern wunschgemäß nach unten in die Auffangwanne fallen. Von diesem Stand der Technik nach der DE 27 38 942 C2 geht die vorliegende Erfindung aus.

Auch in der US-A- 2,507,335 und der US-A- 2,583,039 ist jeweils eine Spülvorrichtung der vorliegenden Art offenbart, die in der Spülposition Spülgas im Gegenstrom zur Strömungsrichtung auf ein erstes Filterelement leitet und gleichzeitig die beiden neben dem ersten Filterelement angeordneten zweiten Filterelemente abdeckt, so dass diese aus dem Filterprozess abgekoppelt sind. Die als Gleitschlitten ausgestaltete Spülvorrichtung ist in diesen Schriften zum Stand der Technik jeweils so breit ausgebildet, dass die von dem gereinigten ersten Filterelement aus gesehenen, übernächsten Filterelemente leicht abgeschattet sind.

Die aus dem genannten Stand der Technik bekannte Vorrichtung und das bekannte Verfahren zum Filtern von Partikeln aus Gasen liefern seit langem zufriedenstellende Ergebnisse. Allerdings hat sich herausgestellt, dass immer dann, wenn ein Filterelement frisch gereinigt worden ist, im Reingasraum eine höhere Partikelkonzentration auftritt, insbesondere von besonders kleinen Partikeln, wie Feinstaub mit typischen Korngrößen von 2,5 bis 10 µm. Je nach den Grenzwerten für eine noch zu tolerierende Partikelkonzentration bzw. für einen zu tolerierenden Feinstaubanteil im Reingas kann dies nachteilig sein.

Der vorliegenden Erfindung liegt daher die Aufgabe zugrunde, eine Vorrichtung und ein Verfahren der oben beschriebenen Art hinsichtlich des Partikelgehalts im gefilterten Reingas zu verbessern.

Gelöst ist diese Aufgabe durch eine Vorrichtung mit den Merkmalen des Anspruchs 1 sowie durch ein Verfahren mit den Merkmalen des Anspruchs 7. Bevorzugte Ausgestaltungen der erfindungsgemäßen Vorrichtung finden sich in den Ansprüchen 2 bis 6; vorteilhafte Weiterbildungen des erfindungsgemäßen Verfahrens sind in den Ansprüchen 8 bis 13 niedergelegt.

Erfindungsgemäß ist erkannt worden, dass durch ein frisch abgereinigtes Filterelement ein um ein Mehrfaches erhöhter Volumenstrom an Rohgas durchtritt, sobald dieses frisch abgereinigte Filterelement von der Spülvorrichtung wieder freigegeben und hierdurch in den kontinuierlich laufenden Filterprozess zurückgegeben wird. Diese Tatsache bewirkt, dass insbesondere besonders kleine Partikel in überproportional großer Menge durch das frisch abgereinigte Filterelement hindurchtreten und in den Reingasraum gelangen können.

Diese Erkenntnis führte zur erfindungsgemäßen Lösung des gegebenen Problems: Wenn die Spülvorrichtung ein erstes Filterelement mit Spülgas im Gegenstrom reinigt, wird nicht nur, wie im Stand der Technik, ein zweites Filterelement, das neben dem zu reinigenden ersten Filterelement angeordnet ist, abgedeckt und somit vom Filterprozess vollständig entkoppelt, sondern es wird außerdem mindestens ein drittes Filterelement, das neben dem ersten oder neben dem zweiten Filterelement angeordnet ist, nur teilweise abgedeckt, um die Durchströmung dieses dritten Filterelements mit dem Rohgasstrom zu reduzieren. Wenn die Spüldüse von einem frisch abgereinigten Filterelement zum nächsten, benachbarten Filterelement verfährt, um dieses zu reinigen, wird das frisch abgereinigte Filterelement also entweder als zweites Filterelement vollständig abgedeckt, oder als erfindungsgemäßes drittes Filterelement nur teilweise abgedeckt. Wenn dieses frisch abgereinigte Filterelement zunächst als zweites Filterelement vollständig abgedeckt wird, rückt es später im Zuge des Verfahrens der Spüldüse von Spülposition zu Spülposition an die erfindungsgemäße dritte Position mit teilweiser Abdeckung.

Somit wird erfindungsgemäß ein frisch abgereinigtes Filterelement beim Zurückgeben in den kontinuierlichen Filterprozess nicht mehr, wie dies im Stand der Technik der Fall ist, sofort mit dem vollen Differenzdruck zwischen dem Rohgasraum und dem Reingasraum und somit mit dem erfindungsgemäß beobachteten, um ein Mehrfaches erhöhten Volumenstrom beaufschlagt, sondern es wird langsam anfiltriert, und zwar zu Beginn lediglich mit etwa 50 % des vollen Rohgasstroms oder weniger, vorzugweise weniger als 15 % und idealerweise zwischen 2-15 %.

Ein frisch gereinigtes Filterelement hat einen geringeren Differenzdruck bzw. Druckverlust als ein nicht abgereinigtes Filterelement und dadurch ist der Volumenstrom um Faktoren höher. Mit dem teilweisen Abdecken des frisch gereinigten Filterelements wird der Druckverlust so weit erhöht, dass der Differenzdruck des frisch gereinigten Filterelements, also der Druckverlust dieses Filterelements zusammen mit dem Druckverlust durch das teilweise Abdecken, den Druckverlust eines nicht frisch gereinigten Filterelements überschreitet. Somit strömt durch ein frisch gereinigtes Filterelement bzw. Filterreihe mit teilweiser Abdeckung immer ein geringerer Volumenstrom gegenüber einem Filterelement bzw. Filterreihe ohne Abdeckung.

Durch dieses langsame Anfiltrieren wird die im Stand der Technik beobachtete Zunahme von Partikeln, insbesondere Feinstaubpartikeln, im Reingasstrom bei frisch abgereinigten Filterelementen stark reduziert. Während des erfindungsgemäßen schonenden Anfiltierens der frisch abgereinigten Filterelemente wächst auf deren Rohgasseite wieder langsam eine Partikelschicht auf, die den Volumenstrom durch das Filterelement wieder auf ein "Normalmaß" verringert. Dann spricht nichts mehr dagegen, das entsprechende Filterelement wieder vollständig in den Filterprozess einzugliedern.

Erfindungsgemäß ist weiter erkannt worden, dass eine gewisse, auf dem Filterelement verbleibende Partikelschicht zusätzlich verhindert, dass besonders kleine Partikel mit dem Rohgasstrom durch das Filterelement hindurchtreten können. Der "Staubkuchen" unterstützt also die Filterwirkung, solange er nicht zu mächtig wird. Diese Erkenntnis führt im Rahmen der vorliegenden Erfindung zur bevorzugten Weiterbildung des erfindungsgemäßen Verfahrens, nach welcher die Filterelemente von Spülgas nicht regelrecht freigeblasen werden, sondern das Spülgas mit einem Druck in das Filterelement eingeleitet wird, der lediglich unwesentlich höher als der Druck im Rohgasraum ist, so dass zwischen dem Spülgas und dem Rohgasraum nur eine geringe Druckdifferenz vorliegt. Sofern im Rohgasraum, wie dies bei vielen Anwendungen der Fall ist, ein Druck herrscht, der leicht unterhalb des Umgebungsdrucks liegt, kann das Spülgas, beispielsweise Umgebungsluft, im Rahmen der vorliegenden Erfindung unter Umgebungsdruck auf die Filterelemente geleitet werden. Dies bietet den großen Vorteil, dass in der Spülvorrichtung auf ein Gebläse, eine Pumpe oder dergleichen zum Einleiten des Spülgases verzichtet werden kann. Hierdurch wird die Filtervorrichtung vereinfacht, was Kostenvorteile und Vorteile bei der Zuverlässigkeit und Wartungsfreundlichkeit mit sich bringt.

Insbesondere bei einer Verwendung von Filterschläuchen als Filterelementen führt das Einleiten von Spülgas mit nur geringem Differenzdruck dazu, dass sich die Filterschläuche beim Einleiten des Spülgases im Wesentlichen nur bewegen, nämlich entspannen oder aufblähen, wodurch die sich rohgasseitig an der Außenseite der Filterelemente angelagerte Partikelschicht löst. Durch ein solches im Wesentlichen durch Bewegung erzeugtes Ablösen der Partikelschicht verbleibt, anders als beim bisherigen Freiblasen der Filterelemente, eine gewisse Restpartikelschicht auf der Rohgasseite des Filterelements, die verhindert, dass die unerwünschten Feinpartikel durch das frisch abgereinigte Filterelement in den Reingasraum hindurchtreten können.

Die vorliegende Erfindung ist jedoch nicht auf die Verwendung von Filterschläuche eingeschränkt; es können vielmehr alle Arten von Filterelementen eingesetzt werden, die den Rohgasraum vom Reingasraum trennen und bei einem Durchtritt des Rohgasstroms diesen zu einem Reingasstrom filtern.

Nach einer besonders bevorzugten Ausgestaltung der vorliegenden Erfindung umfasst die Spülvorrichtung mindestens eine Spüldüse mit mindestens zwei Düsenöffnungen oder Lochreihen, womit bedarfsweise und/oder regelmäßig zwei erste Filterelemente bzw. zwei erste Filterreihen gleichzeitig mit Spülgas gereinigt werden, während ein zwischen diesen beiden ersten Filterelementen angeordnetes zweites Filterelement bzw. eine zwischen den beiden ersten Filterreihen angeordnete zweite Filterreihe vollständig abgedeckt wird, und außerdem mindestens eines der dritten Filterelemente, die neben den ersten Filterelementen angeordnet sind bzw. mindestens eine der dritten Filterreihen, die neben den ersten Filterreihen angeordnet sind, teilweise abgedeckt werden, so dass dieses dritte Filterelement bzw. Filterreihe nur mit einem reduzierten Rohgasstrom durchströmt wird. Durch die zwei gleichzeitig mit Spülgas beaufschlagten Filterelemente bzw. Filterreihen werden diese sukzessive vor- und nachgereinigt, wobei ein Wiedereingliedern in den normalen Filterprozess durch schonendes Anfiltrieren erfolgt.

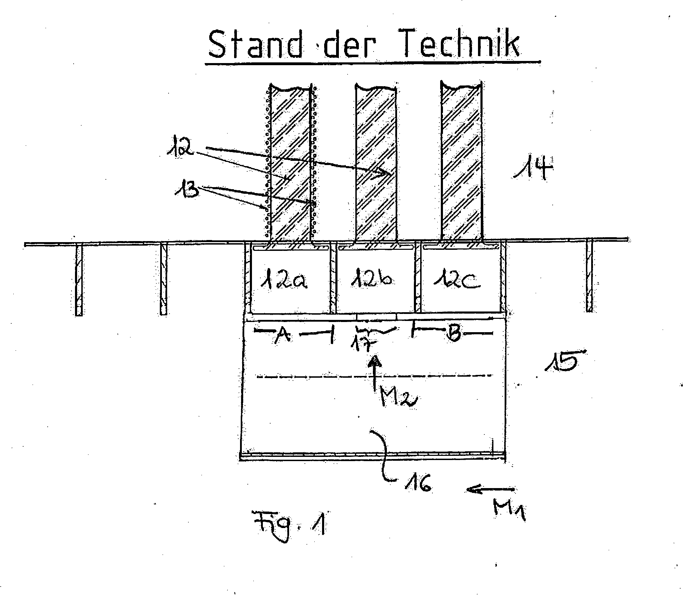

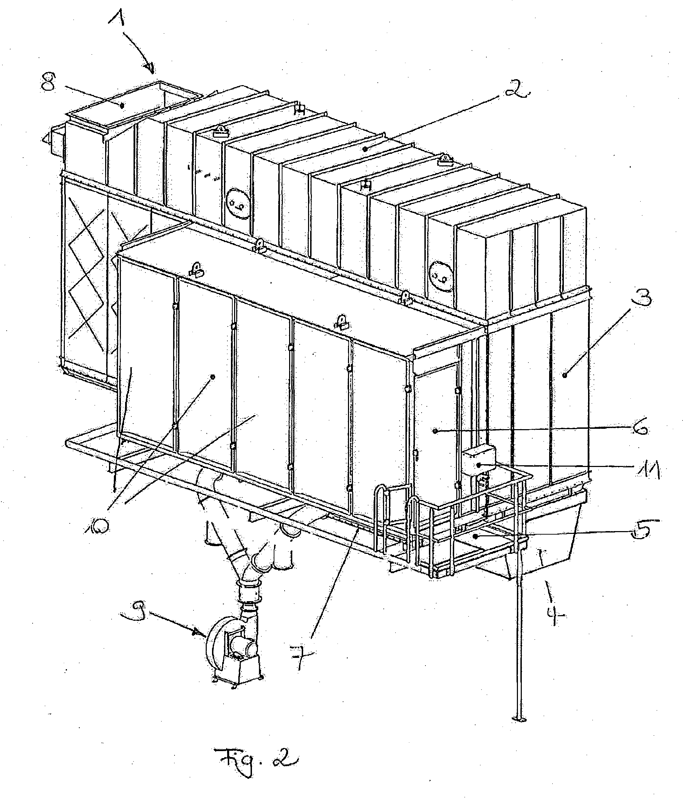

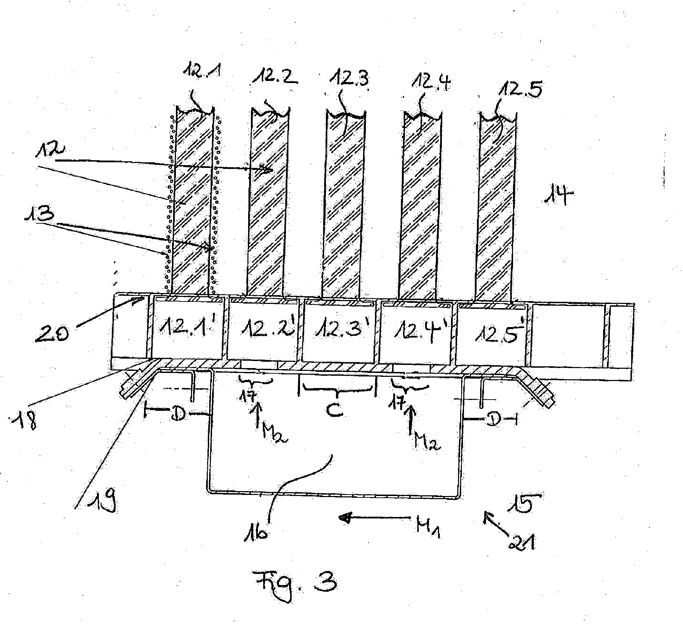

Ein Ausführungsbeispiel für eine erfindungsgemäße Vorrichtung wird im Folgenden anhand der beigefügten Figuren 2 und 3 näher beschrieben und erläutert. Die beigefügte Figur 1 soll das bereits im Stand der Technik bekannte Prinzip einer Vorrichtung der vorliegenden Art illustrieren. Es zeigen also:
- Figur 1: eine schematische Darstellung eines Teils einer Vorrichtung zum Filtern von Partikeln aus Gasen aus dem Stand der Technik in Draufsicht;
- Figur 2: eine schematische Darstellung einer erfindungsgemäßen Vorrichtung zum Filtern von Partikeln aus einem Rohgasstrom;
- Figur 3: eine schematische Darstellung des Ablaufes eines Spülverfahrens mittels einer erfindungsgemäßen Vorrichtung zum Filtern von Partikeln aus einem Rohgasstrom; in einer Draufsicht wie in Figur 1

Figur 1 zeigt schematisch in Draufsicht mehrere Filterelemente 12 zum Filtern von Partikeln aus einem Rohgasstrom 1. Auf einer Rohgasseite 14 des Filterelementes 12a ist eine Staubschicht 13 vorhanden, welche auch als "Filterkuchen" bezeichnet wird. Die Staubschicht 13 setzt sich aus Partikeln des Rohgasstromes 1 zusammen, die von der Oberfläche des Filterelements 12 zurückgehalten werden bzw. Partikeldurchmesser größer als die Porigkeit des Filterkuchens bzw. die Maschenweite des Filtermaterials aufweisen.

Die Filterelemente 12 trennen die Rohgasseite 14 von einer Reingasseite 15, auf welcher das gereinigte Rohgas, auch als Reingas bezeichnet, abgezogen wird.

Die Filterelemente 12 sind matrixartig, und somit in Filterreihen 12.a, 12.b und 12.c übereinander angeordnet. An diesen Filterreihen 12.a, 12.b und 12.c ist auf der Reingasseite 15 eine Spüldüse 16 positioniert. Diese Spüldüse 16 steht in Wirkverbindung mit einer Spülvorrichtung (nicht gezeigt) zum Reinigen der Filterelemente 12 mit einem Spülgas. Die Spüldüse 16 ist in bzw. entgegen der Pfeilrichtung M1 von Filterreihe zu Filterreihe verfahrbar. Sie weist eine Düsenöffnung 17 auf zum Einbringen von Spülgas. In der vorliegenden Darstellung ist die Spüldüse 16 mit ihrer Düsenöffnung 17 vor der Filterreihe 12.b positioniert. Die Filterreihe 12.b ist bereits von der Staubschicht 13 befreit.

Für den nächsten Spülvorgang fährt die Spüldüse 16 beispielsweise in Richtung des Pfeils M1 vor das nächste zu reinigende Filterelement 12, hier also vor die Filterreihe 12.a. Anschließend wird das Filterelement 12.a und die über und unter demselben angeordneten Filterelemente 12 derselben Reihe in Richtung des Pfeils M2 durch die Düsenöffnung 17 der Spüldüse 16 mit Spülgas beaufschlagt und freigeblasen. Hierdurch löst sich die Staubschicht 13 ab und fällt in den Spalt links und rechts von der Filterreihe 12.a. Während dieses Vorgangs sind die Filterelemente 12 rechts und links von dem Filterelement 12.a durch die Bereiche A und B der Spüldüse 16 blockiert, sodass durch diese blockierten Filterelemente kein Gasstrom von der Rohgasseite 14 zur Reingasseite 15 gelangen kann.

Figur 2 zeigt eine erfindungsgemäße Vorrichtung zum Filtern von Partikeln aus einem Rohgasstrom 1, umfassend eine Rohgashaube 2 und ein Filtergehäuse 3. Die Rohgashaube 2 dient zur möglichst gleichmäßigen Verteilung des zu filternden Rohgases.

In dem Filtergehäuse 3 sind mehrere Filterelemente (nicht gezeigt) angeordnet.

Unterhalb des Filtergehäuses 3 ist eine Filterwanne 4 vorgesehen. Die Filterwanne 4 dient dazu, die sich an den Filterelementen anlagernde und bei einem Spülvorgang der Filterelemente abgelöste Staubschicht aufzunehmen.

Eine Bühne 5 ermöglicht einen Zugang zu einem Reingasraum 6. Insbesondere im Falle von anfallenden Reparatur- oder Wartungsarbeiten ist der Reingasraum demzufolge von außen leicht zugänglich.

Das gefilterte Reingas wird durch den Reingasanschluss 7 abgezogen. Das zu reinigende Rohgas wird über den Rohgasanschluss 8 der Rohgashaube 2 der Vorrichtung 1 zugeführt.

Unterhalb des Reingasraumes 6 ist ein Spülluftventilator 9 vorgesehen. Der Spülluftventilator 9 erzeugt die erforderliche Spülluft, mittels derer die Filterelemente (nicht gezeigt) gereinigt werden. Der Spülluftventilator 9 ist über Verteilerleitungen mit einer oder mehreren Spüldüse(n) (nicht gezeigt) verbunden. Eine Anordnung eines Spülluftventilators ist nicht zwingend erforderlich, die Spülluft kann ebenfalls durch den Unterdruck bzw. den Differenzdruck zwischen dem Rohgasraum 3 und dem Reingasraum 6 angesaugt werden.

An dem Reingasraum 6 sind weitere Türen 10 vorgesehen für einen erleichterten und gezielten Zugang zu einzelnen Filterelementen im Falle von Reparatur- oder Wartungsarbeiten. Es müssen nicht zwangsläufig Türen 10 vorgesehen sein, bei einer entsprechenden Breite des Reingasraumes 6 ist es möglich, die Filterelemente im Reingasraum 6 auszutauschen.

An der Bühne 5 des Reingasraumes 6 ist ein Spülwagenantrieb 11 angeordnet. Dieser Spülwagenantrieb 11 bewegt den Spülwagen mit einer oder mehreren Spüldüsen (nicht gezeigt). Mittels einer Steuerungseinheit wird die Spüldüse des Spülwagens (nicht gezeigt) vor einer Reihe an Filterelementen positioniert. Einzelne Filterreihen werden nacheinander angefahren, wobei die Spüldüse nach dem Erreichen der letzten zu reinigenden Reihe an Filterelementen in die Ausgangsstellung zurückgefahren wird und der Spülprozess bei der ersten Reihe an Filterelementen erneut beginnt.

Jeder Spülwagen hat mindestens eine Spüldüse. Eine Spüldüse hat im vorliegenden Ausführungsbeispiel zwei Lochreihen, und reinigt demzufolge zwei Filterreihen parallel. Je nachdem wie viele Filterreihen verbaut sind, wird eine entsprechende Anzahl an Spüldüsen verwendet.

Figur 3 zeigt eine schematische Darstellung eines Teils des Innenaufbaus der in Figur 2 dargestellten Vorrichtung in Draufsicht, umfassend fünf parallel zueinander ausgerichtete Filterelemente 12.1, 12.2, 12.3, 12.4, 12.5, welche Filterelemente 12.1, 12.2, 12.3, 12.4, 12.5 in Filterreihen 12.1' , 12.2', 12.3', 12.4' und 12.5' ausgerichtet sind.

Die Filterelemente 12 befinden sich auf einer Rohgasseite 14. Auf der Rohgasseite 14 ist das Rohgas mit Partikeln beladen.

Das erste Filterelement 12.1 der Filterreihe 12.1' ist mit einer Staubschicht 13 versehen. Diese Staubschicht 13 setzt sich zusammen aus von dem Filterelement 12.1 der Filterreihe 12.1' abgefilterten Partikeln des Rohgasstromes 1 auf der Rohgasseite 14.

Die Filterelemente trennen die Rohgasseite 14 von einer Reingasseite 15. Auf der Reingasseite 15 ist eine Spüldüse 16 angeordnet.

Die Spüldüse 16 weist zwei Düsenöffnungen 17 auf, durch welche ein Spülgasstrom entgegen der Strömungsrichtung des zu reinigenden Gasstromes (von der Rohgasseite 14 zur Reingasseite 15) in Richtung des Pfeils M2 beaufschlagbar ist.

Zwischen den beiden Düsenöffnungen 17 ist die Filterreihe 12.3' im Bereich C abgedeckt, so dass kein Gasstrom von der Rohgasseite 14 auf die Reingasseite 15 gelangen kann.

In den Teilbereichen D sind die Filterreihen 12.1' und 12.5' teilweise abgedeckt, derart, dass seitlich eine Austrittsöffnung 18 vorgesehen ist, durch welche ein reduzierter Gasstrom von der Rohgasseite 14 zur Reingasseite 15 gelangen kann. Die Austrittsöffnung 18 kann mittels einer verstellbaren Abdeckung 19 variiert werden, wodurch der austretende Volumenstrom gezielt an die Umgebungsbedingungen anpassbar ist.

Im Verlauf des Filterprozesses von Partikeln aus dem Rohgasstrom lagern sich rohgasseitig an den Filterelementen 12 Partikel in Form der Staubschicht 13 an. Die Staubschicht 13 wächst kontinuierlich an. Ab einem bestimmten Grenzwert müssen die Filterelemente 12 von der Staubschicht 13 befreit werden, um eine konstante Filterleistung zu gewährleisten und eine Überlastung des Filterelementes zu verhindern. Eine solche Überlastung bedeutet, dass sich der Filter zusetzt und offline oder manuell gereinigt werden muss. Offline reinigen bedeutet, dass der Filtervorgang insgesamt unterbrochen und die Reinigung während einer Betriebsunterbrechung in Gang gesetzt werden muss. Ein manuelles Reinigen erfordert den manuellen Austausch der Filterelemente. Erfindungsgemäß wird das Filterelement 12 rechtzeitig und während des Betriebs der Vorrichtung (online) gereinigt.

Hierzu wird die Spüldüse 16 über einen Spülluftanschluss (nicht gezeigt) mit einem Spülgas beaufschlagt. Dieses Spülgas gelangt in Richtung der Pfeile M2 durch die Düsenöffnungen 17 in die Filterelemente 12 der Filterreihen 12.2' und 12.4'. Die Filterelemente 12 der Filterreihen 12.2' und 12.4' blähen sich auf, wodurch sich die Staubschicht 13 im Wesentlichen schon aufgrund der Bewegung löst. Die abgelöste Staubschicht 13 fällt durch die Spalte zwischen den Filterreihen 12.1' und 12.2' bzw. 12.2' und 12.3' bzw. 12.3' und 12.4' bzw. 12.4' und 12.5' in die Filterwanne (nicht gezeigt, siehe Figur 2).

Ein sehr kleiner Teil der abgelösten Staubschicht 13 (zwischen den Filterreihen 12.1' und 12.2' sowie zwischen den Filterreihen 12.4' und 12.5') wird von den Filterreihen 12.1' und 12.5', welche nur im Bereich D abgedeckt sind, angesaugt. Die Filterreihe 12.4' wird in diesem Prozessschritt nachgereinigt. Diese Vorgänge finden parallel zueinander statt.

In einem nächsten Verfahrensschritt wird die Spüldüse 16 in Richtung des Pfeiles M1 mittig vor der Filterreihe 12.2' positioniert. Dann werden die Filterreihen 12.1' und 12.3' mit Spülgas beaufschlagt.

Ist die Spüldüse 16 an der letzten zu reinigenden Filterreihe angelangt, wird sie wieder in ihre Ausgangsposition zurückgefahren und der Reinigungsprozess der Filterreihen beginnt erneut.

Die Bewegung der Spüldüse 16 ist nicht auf die Richtung des Pfeils M1 beschränkt, der Bewegungsablauf kann auch in entgegengesetzter Richtung oder in wechselnden Richtungen erfolgen.

### Bezugszeichenliste

- 1: Rohgasstrom
- 2: Rohgashaube
- 3: Filtergehäuse, Rohgasraum
- 4: Filterwanne
- 5: Bühne
- 6: Reingasraum
- 7: Reingasanschluss
- 8: Rohgasanschluss
- 9: Spülluftventilator
- 10: Tür
- 11: Spülwagenantrieb
- 12: Filterelement

- 12.a: Filterelement bzw. Filterreihe
- 12.b: Filterelement bzw. Filterreihe
- 12.c: Filterelement bzw. Filterreihe
- 12.1: Filterelement
- 12.2: Filterelement
- 12.3: Filterelement
- 12.4: Filterelement
- 12.5: Filterelement
- 12.1': Filterreihe
- 12.2': Filterreihe
- 12.3': Filterreihe
- 12.4': Filterreihe
- 12.5': Filterreihe
- 13: Staubschicht
- 14: Rohgasseite
- 15: Reingasseite
- 16: Spüldüse
- 17: Düsenöffnung
- 18: Austrittsöffnung
- 19: Abdeckung, verstellbar
- 20: Trennwand
- 21: Spülwagen

- M1: Bewegungsrichtung
- M2: Bewegungsrichtung
- A: Bereich
- B: Bereich
- C: Bereich
- D: Teilbereich

## Patentansprüche

1. Vorrichtung zum Filtern von Partikeln aus Gasen, umfassend mindestens einen Rohgasraum (3) zur Durchleitung eines mit Partikeln beladenen Rohgasstroms (1), mindestens einen Reingasraum (6) zum Aufnehmen eines Reingasstroms, der durch Filtern des Rohgasstroms (1) entsteht, , sowie eine Anzahl von zum Filtern des Rohgasstroms (1) vorgesehenen Filterelementen (12), die jeweils eine Rohgasseite (14) und eine Reingasseite (15) aufweisen, wobei die Rohgasseite (14) der Filterelemente (12) mit dem Rohgasraum (3) und die Reingasseite der Filterelemente (12) mit dem Reingasraum (6) in Verbindung stehen, und wobei zwischen dem Rohgasraum (3) und dem Reingasraum (6) eine Druckdifferenz herstellbar ist, so dass die Filterelemente (12) vom Rohgasstrom (1) in einer Strömungsrichtung von der Rohgasseite (14) zur Reingasseite (15) durchströmt werden und hierbei Partikel aus dem Rohgasstrom (1) filtern, und weiterhin umfassend eine Spülvorrichtung mit mindestens einer Spüldüse (16) zum bedarfsweisen und/oder regelmäßigen Reinigen mindestens eines Filterelementes (12) und höchstens eines Teils der Filterelemente (12) gleichzeitig, zu welchem Zweck die Spüldüse (16) an die Reingasseite (15) eines zu reinigenden ersten Filterelements (12.4) heranfahrbar ist, um in einer Spülposition Spülgas im Gegenstrom (M2) zur Strömungsrichtung auf das erste Filterelement (12.4) zu leiten, und wobei die Spülvorrichtung so ausgestaltet ist, dass in der Spülposition mindestens ein zweites Filterelement (12.3), das neben dem zu reinigenden ersten Filterelement (12.4) angeordnet ist, abgedeckt wird, so dass das zweite Filterelement (12.3) nicht vom Rohgasstrom (1) durchströmbar ist, **dadurch gekennzeichnet,**
**dass** die Spülvorrichtung in der Spülposition außerdem mindestens ein drittes, neben dem zu reinigenden ersten (12.4) oder neben dem zweiten Filterelement (12.3) angeordnetes Filterelement (12.5) nur teilweise abdeckt, um die Durchströmung dieses dritten Filterelements (12.5) mit dem Rohgasstrom (1) zu reduzieren, wobei die Spülvorrichtung so ausgestaltet ist, dass der Rohgasstrom (1) durch das dritte Filterelement (12.5) wenigstens anfangs auf maximal 50%, vorzugsweise auf maximal 15%, höchst vorzugsweise auf 2 - 10% reduziert wird, und insbesondere während des Spülvorgangs verändert werden kann, um ein frisch abgereinigtes Filterelement (12.5) schonend anfiltrieren zu können.

2. Vorrichtung nach Anspruch 1,
**dadurch gekennzeichnet,**
**dass** die Filterelemente (12) matrixförmig in mehreren, als Zeilen und Spalten ausgebildeten Filterreihen (12.1', 12.2', 12.3', 12.4', 12.5') angeordnet sind, und dass die Spülvorrichtung mit mindestens einer Spüldüsenreihe (17) versehen ist, die an die Reingasseite (15) einer zu reinigenden ersten Filterreihe (12.4') heranfahrbar ist, um in einer Spülposition Spülgas im Gegenstrom (M2) zur Strömungsrichtung auf die Filterelemente (12) der ersten Filterreihe (12.4') zu leiten, während die Spülvorrichtung in der Spülposition mindestens eine zweite Filterreihe (12.3'), die neben der zu reinigenden ersten Filterreihe (12.4`) angeordnet ist, abdeckt, so dass die zweite Filterreihe (12.3') nicht vom Rohgasstrom (1) durchströmbar ist, und außerdem mindestens eine dritte, neben der zu reinigenden ersten (12.4`) oder neben der zweiten Filterreihe (12.3') angeordnete Filterreihe (12.5') nur teilweise abdeckt, um die Durchströmung dieser dritten Filterreihe (12.5`) mit dem Rohgasstrom (1) zu reduzieren.

3. Vorrichtung nach einem der Ansprüche 1 oder 2,
**dadurch gekennzeichnet,**
**dass** die Spülvorrichtung mindestens eine Spüldüse (16) mit mindestens zwei Düsenöffnungen (17) oder Lochreihen aufweist, die derart voneinander beabstandet angeordnet sind, dass sie in einer Spülposition zwei erste Filterelemente (12.2, 12.4) oder zwei erste Filterreihen (12.2', 12.4') mit Spülgas im Gegenstrom (M2) zur Strömungsrichtung beaufschlagen, während ein zwischen den beiden ersten Filterelementen (12.2, 12.4) angeordnetes zweites Filterelement (12.3) oder eine zwischen den beiden ersten Filterreihen (12.2', 12.4') angeordnete zweite Filterreihe (12.3') von der Spülvorrichtung abgedeckt ist, und die Spülvorrichtung außerdem mindestens eines der dritten Filterelemente (12.1, 12.5), die neben den ersten Filterelementen (12.2, 12.4) angeordnet sind, oder mindestens eine der dritten Filterreihen (12.1', 12.5'), die neben den ersten Filterreihen (12.2', 12.4') angeordnet sind, nur teilweise abdeckt, um die Durchströmung dieses dritten Filterelements (12.1, 12.5) oder dieser dritten Filterreihe (12.1', 12.5') mit dem Rohgasstrom (1) zu reduzieren.

4. Vorrichtung nach mindestens einem der Ansprüche 1 bis 3,
**dadurch gekennzeichnet,**
**dass** die Spülvorrichtung als entlang einer Trennwand (20) zwischen dem Rohgasraum (3) und dem Reingasraum (6) verfahrbarer Spülwagen (21) ausgebildet ist, wobei der Spülwagen (21) vorzugsweise mit einer oder mehreren Spüldüsen (16) und mit einer an den Spüldüsen (16) angeordneten, entlang der Trennwand (20) gleitenden Dichtfläche versehen ist.

5. Vorrichtung nach mindestens einem der Ansprüche 1 bis 4,
**dadurch gekennzeichnet,**
**dass** die Filterelemente (12) als Filterschläuche ausgebildet sind, die im Rohgasraum (3) positioniert sind und an einer Trennwand (20) zwischen dem Rohgasraum (3) und dem Reingasraum (6) in den Reingasraum (6) münden, so dass die Rohgasseite (14) die Außenfläche des Filterschlauchs und die Reingasseite (15) die Innenfläche des Filterschlauchs ist.

6. Vorrichtung nach mindestens einem der Ansprüche 1 bis 5,
**dadurch gekennzeichnet,**
**dass** die Spülvorrichtung das mindestens eine dritte Filterelement (12.1, 12.5) oder die mindestens eine dritte Filterreihe (12.1', 12.5') solcherart teilweise abdeckt, dass ein Druckverlust am teilweise abgedeckten dritten Filterelement oder an der teilweise abgedeckten dritten Filterreihe auch dann größer als ein Druckverlust an einem nicht frisch gereinigten Filterelement oder einer nicht frisch gereinigten Filterreihe ist, wenn das teilweise abgedeckte dritte Filterelement oder die teilweise abgedeckte dritte Filterreihe frisch gereinigt ist.

7. Verfahren zum Filtern von Partikeln aus Gasen, wobei ein mit Partikeln beladener Rohgasstrom (1) in einer Strömungsrichtung durch mindestens einen Rohgasraum (3) und anschließend durch eine Anzahl von Filterelementen (12) geleitet wird, wo er zu einem Reingasstrom gefiltert wird, bevor er in mindestens einen Reingasraum (6) mündet, und wobei bedarfsweise und/oder regelmäßig mindestens ein erstes Filterelement (12.4) und höchstens ein Teil der Filterelemente (12) gleichzeitig gereinigt wird, indem ein Spülgas im Gegenstrom (M2) zur Strömungsrichtung auf das zu reinigende erste Filterelement (12.4) geleitet wird, während ein zweites Filterelement (12.3), das neben dem zu reinigenden ersten Filterelement (12.4) angeordnet ist, abgedeckt wird, so dass das zweite Filterelement (12.3) nicht vom Rohgasstrom (1) durchströmt wird,
**dadurch gekennzeichnet,**
**dass** beim Reinigen des ersten Filterelements (12.4) außerdem mindestens ein drittes Filterelement (12.5), das neben dem zu reinigenden ersten (12.4) oder neben dem zweiten Filterelement (12.3) angeordnet ist, teilweise abgedeckt wird, so dass dieses dritte Filterelement (12.5) nur mit einem reduzierten Rohgasstrom (1) durchströmt wird, wobei der Rohgasstrom (1) durch das dritte Filterelement (12.5) wenigstens anfangs auf maximal 50%, vorzugsweise auf maximal 15%, höchst vorzugsweise auf 2-10%, reduziert wird, um ein frisch abgereinigtes Filterelement (12.5) schonend anfiltrieren zu können.

8. Verfahren nach Anspruch 7,
**dadurch gekennzeichnet,**
**dass** der Rohgasstrom (1) durch Filterelemente (12) geleitet wird, die matrixförmig in mehreren, als Zeilen und Spalten ausgebildeten Filterreihen (12.1', 12.2', 12.3', 12.4', 12.5') angeordnet sind, und dass bedarfsweise und/oder regelmäßig mindestens eine erste Filterreihe (12.4`) und höchstens ein Teil der Filterreihen (12.1', 12.2', 12.3', 12.4', 12.5') gleichzeitig gereinigt wird, indem ein Spülgas im Gegenstrom (M2) zur Strömungsrichtung auf die zu reinigende erste Filterreihe (12.4') geleitet wird, während eine zweite Filterreihe (12.3'), die neben der zu reinigenden ersten Filterreihe (12.4`) angeordnet ist, abgedeckt wird, so dass die zweite Filterreihe (12.3') nicht vom Rohgasstrom (1) durchströmt wird, und außerdem mindestens eine dritte, neben der zu reinigenden ersten (12.4`) oder neben der zweiten Filterreihe (12.3') angeordnete Filterreihe (12.5`) nur teilweise abgedeckt wird, so dass diese dritte Filterreihe (12.5') nur mit einem reduzierten Rohgasstrom (1) durchströmt wird.

9. Verfahren nach einem der Ansprüche 7 oder 8,
**dadurch gekennzeichnet,**
**dass** bedarfsweise und/oder regelmäßig zwei erste Filterelemente (12.2, 12.4) oder zwei erste Filterreihen (12.2', 12.4') gleichzeitig mit Spülgas im Gegenstrom (M2) zur Strömungsrichtung beaufschlagt werden, während ein zwischen den beiden ersten Filterelementen (12.2, 12.4) angeordnetes zweites Filterelement (12.3) oder eine zwischen den beiden ersten Filterreihen (12.2', 12.4') angeordnete zweite Filterreihe (12.3') abgedeckt wird, und außerdem mindestens eines der dritten Filterelemente (12.1, 12.5), die neben den ersten Filterelementen (12.2, 12.4) angeordnet sind, oder mindestens eine der dritten Filterreihen (12.1',12.5'), die neben den ersten Filterreihen (12.2', 12.4') angeordnet sind, teilweise abgedeckt werden, so dass dieses dritte Filterelement (12.1, 12.5) oder diese dritte Filterreihe (12.1', 12.5') nur mit einem reduzierten Rohgasstrom (1) durchströmt wird.

10. Verfahren nach mindestens einem der Ansprüche 7 bis 9,
**dadurch gekennzeichnet,**
**dass** der Rohgasstrom (1) durch das dritte Filterelement (12.1, 12.5) oder die dritte Filterreihe (12.1`, 12.5`) während des Spülvorgangs verändert werden kann.

11. Verfahren nach mindestens einem der Ansprüche 7 bis 10,
**dadurch gekennzeichnet,**
**dass** das Spülgas mit einem Druck auf die zu reinigenden Filterelemente (12) geleitet wird, der nur unwesentlich höher als der Druck im Rohgasraum (3) ist.

12. Verfahren zumindest nach Anspruch 11,
**dadurch gekennzeichnet,**
**dass** das Spülgas mit Umgebungsdruck auf die zu reinigenden Filterelemente (12) geleitet wird.

13. Verfahren nach mindestens einem der Ansprüche 7 bis 12,
**dadurch gekennzeichnet,**
**dass** das mindestens eine dritte Filterelement (12.1, 12.5) oder die mindestens eine dritte Filterreihe (12.1', 12.5') solcherart teilweise abgedeckt wird, dass ein Druckverlust am teilweise abgedeckten dritten Filterelement oder an der teilweise abgedeckten dritten Filterreihe auch dann größer als ein Druckverlust an einem nicht frisch gereinigten Filterelement oder einer nicht frisch gereinigten Filterreihe ist, wenn das teilweise abgedeckte dritte Filterelement oder die teilweise abgedeckte dritte Filterreihe frisch gereinigt ist.

## Claims

1. Device for filtering particles from gases, comprising at least one raw gas chamber (3) for the passage of a particle-laden raw gas stream (1), at least one clean gas chamber (6) for receiving a clean gas stream formed by filtering the raw gas stream (1), and a number of filter elements (12) provided for filtering the raw gas stream (1), each of which has a raw gas side (14) and a clean gas side (15), wherein the raw gas side (14) of the filter elements (12) communicates with the raw gas chamber (3) and the clean gas side of the filter elements (12) communicates with the clean gas chamber (6), and wherein a pressure difference can be established between the raw gas chamber (3) and the clean gas chamber (6) so that the raw gas stream (1) flows through the filter elements (12) in a flow direction from the raw gas side (14) to the clean gas side (15), in the course of which the filter elements filter particles out of the raw gas stream (1), and further comprising a flushing device having at least one flushing nozzle (16) for cleaning, as necessary and/or routinely, at least one filter element (12) and at most some of the filter elements (12) simultaneously, for which purpose the flushing nozzle (16) is movable to the clean gas side (15) of a first filter element (12.4) which is to be cleaned in order, in a flushing position, to pass flushing gas to the first filter element (12.4) in counterflow (M2) to the flow direction, and wherein the flushing device is configured so that, in the flushing position, at least one second filter element (12.3), which is arranged next to the first filter element (12.4) which is to be cleaned, is covered so that the raw gas stream (1) is unable to flow through the second filter element (12.3),
**characterised in that**
the flushing device, when in the flushing position, in addition only partially covers at least one third filter element (12.5) arranged next to the first filter element (12.4) which is to be cleaned or next to the second filter element (12.3) in order to reduce the flow of the raw gas stream (1) through that third filter element (12.5), the flushing device being configured so that the raw gas stream (1) through the third filter element (12.5) is reduced, at least initially, to a maximum of 50 %, preferably to a maximum of 15 %, most preferably to 2 - 10 %, and especially can be modified during the flushing operation in order to enable a freshly cleaned filter element (12.5) to effect gentle initial filtering.

2. Device according to claim 1,
**characterised in that**
the filter elements (12) are arranged matrix-like in a plurality of filter arrays (12.1', 12.2', 12.3', 12.4', 12.5') formed as lines and columns, and the flushing device is provided with at least one flushing nozzle array (17) which is movable to the clean gas side (15) of a first filter array (12.4') which is to be cleaned in order, in a flushing position, to pass flushing gas to the filter elements (12) of the first filter array (12.4') in counterflow (M2) to the flow direction, while the flushing device, when in the flushing position, covers at least one second filter array (12.3'), which is arranged next to the first filter array (12.4') which is to be cleaned, so that the raw gas stream (1) is unable to flow through the second filter array (12.3'), and in addition only partially covers at least one third filter array (12.5') arranged next to the first filter array (12.4') which is to be cleaned or next to the second filter array (12.3') in order to reduce the flow of the raw gas stream (1) through that third filter array (12.5').

3. Device according to either one of claims 1 and 2,
**characterised in that**
the flushing device has at least one flushing nozzle (16) with at least two nozzle openings (17) or rows of holes which are arranged spaced apart from one another in such a way that, in a flushing position, they supply two first filter elements (12.2, 12.4) or two first filter arrays (12.2', 12.4') with flushing gas in counterflow (M2) to the flow direction, while a second filter element (12.3) arranged between the two first filter elements (12.2, 12.4) or a second filter array (12.3') arranged between the two first filter arrays (12.2', 12.4') is covered by the flushing device, and the flushing device in addition only partially covers at least one of the third filter elements (12.1, 12.5), which are arranged next to the first filter elements (12.2, 12.4), or at least one of the third filter arrays (12.1', 12.5'), which are arranged next to the first filter arrays (12.1', 12.4'), in order to reduce the flow of the raw gas stream (1) through that third filter element (12.1, 12.5) or through that third filter array (12.1', 12.5').

4. Device according to at least one of claims 1 to 3,
**characterised in that**
the flushing device is in the form of a flushing carriage (21) arranged to move along a partition wall (20) between the raw gas chamber (3) and the clean gas chamber (6), the flushing carriage (21) preferably being provided with one or more flushing nozzles (16) and with a sealing surface which is arranged on the flushing nozzles (16) and slides along the partition wall (20).

5. Device according to at least one of claims 1 to 4,
**characterised in that**
the filter elements (12) are in the form of filter hoses which are positioned in the raw gas chamber (3) and open into the clean gas chamber (6) at a partition wall (20) between the raw gas chamber (3) and the clean gas chamber (6), so that the raw gas side (14) is the outer surface of the filter hose and the clean gas side (15) is the inner surface of the filter hose.

6. Device according to at least one of claims 1 to 5,
**characterised in that**
the flushing device partially covers the at least one third filter element (12.1, 12.5) or the at least one third filter array (12.1', 12.5') in such a way that a loss of pressure at the partially covered third filter element or at the partially covered third filter array is greater than a loss of pressure at a non-freshly-cleaned filter element or at a non-freshlycleaned filter array even when the partially covered third filter element or the partially covered third filter array has been freshly cleaned.

7. Method of filtering particles from gases, wherein a particle-laden raw gas stream (1) is passed in a flow direction through at least one raw gas chamber (3) and then through a number of filter elements (12) where it is filtered to form a clean gas stream before it enters at least one clean gas chamber (6), and wherein, as necessary and/or routinely, at least one first filter element (12.4) and at most some of the filter elements (12) simultaneously is/are cleaned by passing a flushing gas to the first filter element (12.4) which is to be cleaned in counterflow (M2) to the flow direction, while a second filter element (12.3), which is arranged next to the first filter element (12.4) which is to be cleaned, is covered so that the raw gas stream (1) does not flow through the second filter element (12.3),
**characterised in that**,
during cleaning of the first filter element (12.4), in addition at least one third filter element (12.5), which is arranged next to the first filter element (12.4) which is to be cleaned or next to the second filter element (12.3), is partially covered so that only a reduced raw gas stream (1) flows through that third filter element (12.5), the raw gas stream (1) through the third filter element (12.5) being reduced, at least initially, to a maximum of 50 %, preferably to a maximum of 15 %, most preferably to 2 - 10 %, in order to enable a freshly cleaned filter element (12.5) to effect gentle initial filtering.

8. Method according to claim 7,
**characterised in that**
the raw gas stream (1) is passed through filter elements (12) which are arranged matrix-like in a plurality of filter arrays (12.1', 12.2', 12.3', 12.4', 12.5') formed as lines and columns, and, as necessary and/or routinely, at least one first filter array (12.4') and at most some of the filter arrays (12.1', 12.2', 12.3', 12.4', 12.5') simultaneously is/are cleaned by passing a flushing gas to the first filter array (12.4') which is to be cleaned in counterflow (M2) to the flow direction, while a second filter array (12.3'), which is arranged next to the first filter array (12.4') which is to be cleaned, is covered so that the raw gas stream (1) does not flow through the second filter array (12.3') and in addition at least one third filter array (12.5') arranged next to the first filter array (12.4') which is to be cleaned or next to the second filter array (12.3') is only partially covered so that only a reduced raw gas stream (1) flows through that third filter array (12.5').

9. Method according to either one of claims 7 and 8,
**characterised in that**,
as necessary and/or routinely, two first filter elements (12.2, 12.4) or two first filter arrays (12.2', 12.4') are supplied simultaneously with flushing gas in counterflow (M2) to the flow direction, while a second filter element (12.3) arranged between the two first filter elements (12.2, 12.4) or a second filter array (12.3') arranged between the two first filter arrays (12.2', 12.4') is covered, and in addition at least one of the third filter elements (12.1, 12.5), which are arranged next to the first filter elements 12.2, 12.4), or at least one of the third filter arrays (12.1', 12.5'), which are arranged next to the first filter arrays (12.2', 12.4'), are partially covered so that only a reduced raw gas stream (1) flows through that third filter element (12.1, 12.5) or through that third filter array (12.1', 12.5').

10. Method according to at least one of claims 7 to 9,
**characterised in that**
the raw gas stream (1) through the third filter element (12.1, 12.5) or through the third filter array (12.1', 12.5') can be modified during the flushing operation.

11. Method according to at least one of claims 7 to 10,
**characterised in that**
the flushing gas is passed to the filter elements (12) which are to be cleaned at a pressure that is only insignificantly higher than the pressure in the raw gas chamber (3).

12. Method at least according to claim 11,
**characterised in that**
the flushing gas is passed to the filter elements (12) which are to be cleaned at ambient pressure.

13. Method according to at least one of claims 7 to 12,
**characterised in that**
the at least one third-filter element (12.1, 12.5) or the at least one third filter array (12.1', 12.5') is partially covered in such a way that a loss of pressure at the partially covered third filter element or at the partially covered third filter array is greater than a loss of pressure at a non-freshly-cleaned filter element or at a non-freshly-cleaned filter array even when the partially covered third filter element or the partially covered third filter array has been freshly cleaned.

## Revendications

1. Dispositif de filtration de particules dans des gaz, comprenant au moins une chambre de gaz brut (3) pour le passage d'un flux de gaz brut (1) chargé de particules, au moins une chambre de gaz purifié (6) pour recevoir un flux de gaz purifiée qui est obtenu par filtration du flux de gaz brut (1), ainsi qu'un certain nombre d'éléments filtrants (12) qui sont prévus pour filtrer le flux de gaz brut (1) et qui présentent chacun un côté gaz brut (14) et un côté gaz purifié (15), sachant que le côté gaz brut (14) des éléments filtrants (12) communique avec la chambre de gaz brut (3) et que le côté gaz purifié des éléments filtrants (12) communique avec la chambre de gaz purifié (6), et sachant qu'une différence de pression peut être créée entre la chambre de gaz brut (3) et la chambre de gaz purifié (6), de sorte que les éléments filtrants (12) sont traversés dans une direction d'écoulement par le flux de gaz brut (1) depuis le côté gaz brut (14) vers le côté gaz purifié (15) et filtrent alors les particules hors du flux de gaz brut (1), et comprenant en outre un dispositif de rinçage pourvu d'au moins une buse de rinçage (16) pour nettoyer en cas de besoin et/ou régulièrement au moins un élément filtrant (12) et au plus une partie des éléments filtrants (12) simultanément, la buse de rinçage (16) pouvant être à cet effet approchée du côté gaz purifié (15) d'un premier élément filtrant (12.4) à nettoyer, afin de diriger dans une position de rinçage du gaz de rinçage à contre-courant (M2) de la direction d'écoulement sur le premier élément filtrant (12.4), et sachant que le dispositif de rinçage est conçu de telle sorte que, dans la position de rinçage, au moins un deuxième élément filtrant (12.3) qui est disposé à côté du premier élément filtrant (12.4) à nettoyer est recouvert, de sorte que le deuxième élément filtrant (12.3) ne peut pas être traversé par le flux de gaz brut (1),
**caractérisé en ce que**, dans la position de rinçage, le dispositif de rinçage recouvre en outre seulement partiellement au moins un troisième élément filtrant (12.5) disposé à côté du premier élément filtrant (12.4) à nettoyer ou à côté du deuxième élément filtrant (12.3), afin de réduire l'écoulement du flux de gaz brut (1) à travers ce troisième élément filtrant (12.5), sachant que le dispositif de rinçage est conçu de telle sorte que le flux de gaz brut (1) à travers le troisième élément filtrant (12.5) est réduit au moins initialement à au maximum 50%, de préférence à au maximum 15% et d'une manière la plus préférée à 2 - 10%, et peut notamment être modifié pendant l'opération de rinçage, afin de pouvoir commencer à filtrer avec ménagement avec un élément filtrant (12.5) qui vient d'être nettoyé.

2. Dispositif selon la revendication 1, **caractérisé en ce que** les éléments filtrants (12) sont disposés en forme de matrice en plusieurs rangées de filtres (12.1', 12.2', 12.3', 12.4', 12.5') réalisées sous forme de lignes et de colonnes, et **en ce que** le dispositif de rinçage est pourvu d'au moins une rangée (17) de buses de rinçage qui peut être approchée du côté gaz purifié (15) d'une première rangée de filtres (12.4') à nettoyer, afin de diriger dans une position de rinçage du gaz de rinçage à contre-courant (M2) de la direction d'écoulement sur les éléments filtrants (12) de la première rangée de filtres (12.4'), tandis que dans la position de rinçage, le dispositif de rinçage recouvre au moins une deuxième rangée de filtres (12.3') qui est disposée à côté de la première rangée de filtres (12.4') à nettoyer, de sorte que la deuxième rangée de filtres (12.3') ne peut pas être traversée par le flux de gaz brut (1), et recouvre en outre seulement partiellement au moins une troisième rangée de filtres (12.5'), disposée à côté de la première rangée de filtres (12.4') ou à côté de la deuxième rangée de filtres (12.3'), afin de réduire l'écoulement du flux de gaz brut (1) à travers cette troisième rangée de filtres (12.5').

3. Dispositif selon l'une des revendications 1 ou 2, **caractérisé en ce que** le dispositif de rinçage présente au moins une buse de rinçage (16) pourvue d'au moins deux ouvertures de buse (17) ou rangées de trous, qui sont disposées à distance entre elles de telle sorte que, dans une position de rinçage, elles sollicitent avec du gaz de rinçage à contre-courant (M2) de la direction d'écoulement deux premiers éléments filtrants (12.2, 12.4) ou deux premières rangées de filtres (12.2', 12.4'), tandis qu'un deuxième élément filtrant (12.3) disposé entre les deux premiers éléments filtrants (12.2, 12.4) ou une deuxième rangée de filtres (12.3') disposée entre les deux premières rangées de filtres (12.2', 12.4') est recouvert(e) par le dispositif de rinçage, et que le dispositif de rinçage recouvre en outre seulement partiellement au moins un des troisièmes éléments filtrants (12.1, 12.5), qui sont disposés à côté des premiers éléments filtrants (12.2, 12.4), ou au moins une des troisièmes rangées de filtres (12.1', 12.5'), qui sont disposées à côté des premières rangées de filtres (12.2', 12.4'), afin de réduire l'écoulement du flux de gaz brut (1) à travers ce troisième élément filtrant (12.1, 12.5) ou cette troisième rangée de filtres (12.1', 12.5').

4. Dispositif selon au moins une des revendications 1 à 3, **caractérisé en ce que** le dispositif de rinçage est réalisé sous la forme d'un chariot de rinçage (21) pouvant être déplacé le long d'une cloison séparatrice (20) entre la chambre de gaz brut (3) et la chambre de gaz purifié (6), sachant que le chariot de rinçage (21) est de préférence pourvu d'une ou plusieurs buses de rinçage (16) et d'une surface d'étanchéité disposée sur les buses de rinçage (16) et glissant long de la cloison séparatrice (20).

5. Dispositif selon au moins une des revendications 1 à 4, **caractérisé en ce que** les éléments filtrants (12) sont réalisés sous la forme de tuyaux souples filtrants qui sont positionnés dans la chambre de gaz brut (3) et qui débouchent dans la chambre de gaz purifié (6) au niveau d'une cloison séparatrice (20) entre la chambre de gaz brut (3) et la chambre de gaz purifié (6), de sorte que le côté gaz brut (14) est la surface extérieure du tuyau souple filtrant et que le côté gaz purifié (15) est la surface intérieure du tuyau souple filtrant.

6. Dispositif selon au moins une des revendications 1 à 5, **caractérisé en ce que** le dispositif de rinçage recouvre partiellement le troisième élément filtrant au moins unique (12.1, 12.5) ou la troisième rangée de filtres au moins unique (12.1', 12.5') de telle sorte qu'une perte de pression au niveau du troisième élément filtrant partiellement recouvert ou au niveau de la troisième rangée de filtres partiellement recouverte est supérieure à une perte de pression au niveau d'un élément filtrant ne venant pas d'être nettoyé ou d'une rangée de filtres ne venant pas d'être nettoyée même si le troisième élément filtrant partiellement recouvert ou la troisième rangée de filtres partiellement recouverte vient d'être nettoyé(e).

7. Procédé de filtration de particules dans des gaz, sachant qu'on dirige un flux de gaz brut (1) chargé de particules dans une direction d'écoulement à travers au moins une chambre de gaz brut (3) puis à travers un certain nombre d'éléments filtrants (12), où il est filtré en un flux de gaz purifié avant de déboucher dans au moins une chambre de gaz purifié (6), et sachant qu'on nettoie en cas de besoin et/ou régulièrement au moins un premier élément filtrant (12.4) et au plus une partie des éléments filtrants (12) simultanément, par le fait qu'on dirige un gaz de rinçage à contre-courant (M2) de la direction d'écoulement sur le premier élément filtrant (12.4) à nettoyer, tandis qu'un deuxième élément filtrant (12.3) qui est disposé à côté du premier élément filtrant (12.4) à nettoyer est recouvert, de sorte que le deuxième élément filtrant (12.3) n'est pas traversé par le flux de gaz brut (1),
**caractérisé en ce que**, lors du nettoyage du premier élément filtrant (12.4), au moins un troisième élément filtrant (12.5) qui est disposé à côté du premier élément filtrant (12.4) à nettoyer ou à côté du deuxième élément filtrant (12.3) est en outre partiellement recouvert, de sorte que ce troisième élément filtrant (12.5) n'est traversé que par un flux réduit de gaz brut (1), sachant que le flux de gaz brut (1) à travers le troisième élément filtrant (12.5) est réduit au moins initialement à au maximum 50%, de préférence à au maximum 15% et d'une manière la plus préférée à 2-10%, afin de pouvoir commencer à filtrer avec ménagement avec un élément filtrant (12.5) qui vient d'être nettoyé.

8. Procédé selon la revendication 7, **caractérisé en ce qu'**on dirige le flux de gaz brut (1) à travers des éléments filtrants (12) qui sont disposés en forme de matrice en plusieurs rangées de filtres (12.1', 12.2', 12.3', 12.4', 12.5') réalisées sous forme de lignes et de colonnes, et **en ce qu'**on nettoie en cas de besoin et/ou régulièrement au moins une première rangée de filtres (12.4') et au plus une partie des rangées de filtres (12.1', 12.2', 12.3', 12.4', 12.5') simultanément, par le fait qu'on dirige un gaz de rinçage à contre-courant (M2) de la direction d'écoulement sur la première rangée de filtres (12.4') à nettoyer, tandis qu'une deuxième rangée de filtres (12.3') qui est disposée à côté de la première rangée de filtres (12.4') à nettoyer est recouverte, de sorte que la deuxième rangée de filtres (12.3') n'est pas traversée par le flux de gaz brut (1), et qu'en outre au moins une troisième rangée de filtres (12.5'), disposée à côté de la première rangée de filtres (12.4') ou à côté de la deuxième rangée de filtres (12.3'), est recouverte seulement partiellement, de sorte que cette troisième rangée de filtres (12.5') n'est traversé que par un flux réduit de gaz brut (1).

9. Procédé selon l'une des revendications 7 ou 8, **caractérisé en ce que** deux premiers éléments filtrants (12.2, 12.4) ou deux premières rangées de filtres (12.2', 12.4') simultanément sont sollicité(e)s en cas de besoin et/ou régulièrement avec du gaz de rinçage à contre-courant (M2) de la direction d'écoulement, tandis qu'un deuxième élément filtrant (12.3) disposé entre les deux premiers éléments filtrants (12.2, 12.4) ou une deuxième rangée de filtres (12.3') disposée entre les deux premières rangées de filtres (12.2', 12.4') est recouvert(e), et qu'en outre au moins un des troisièmes éléments filtrants (12.1, 12.5), qui sont disposés à côté des premiers éléments filtrants (12.2, 12.4), ou au moins une des troisièmes rangées de filtres (12.1', 12.5'), qui sont disposées à côté des premières rangées de filtres (12.2', 12.4'), sont partiellement recouvert(e)s, de sorte que ce troisième élément filtrant (12.1, 12.5) ou cette troisième rangée de filtres (12.1', 12.5') n'est traversé(e) que par un flux réduit de gaz brut (1).

10. Procédé selon au moins une des revendications 7 à 9, **caractérisé en ce que** le flux de gaz brut (1) à travers le troisième élément filtrant (12.1, 12.5) ou la troisième rangée de filtres (12.1', 12.5') peut être modifié pendant l'opération de rinçage.

11. Procédé selon au moins une des revendications 7 à 10, **caractérisé en ce que** le gaz de rinçage est dirigé sur les éléments filtrants (12) à nettoyer avec une pression qui n'est que de peu supérieure à la pression dans la chambre de gaz brut (3).

12. Procédé au moins selon la revendication 11, **caractérisé en ce que** le gaz de rinçage est dirigé sur les éléments filtrants (12) à nettoyer à la pression ambiante.

13. Procédé selon au moins une des revendications 7 à 12, **caractérisé en ce que** le troisième élément filtrant au moins unique (12.1, 12.5) ou la troisième rangée de filtres au moins unique (12.1', 12.5') est partiellement recouvert(e) de telle sorte qu'une perte de pression au niveau du troisième élément filtrant partiellement recouvert ou au niveau de la troisième rangée de filtres partiellement recouverte est supérieure à une perte de pression au niveau d'un élément filtrant ne venant pas d'être nettoyé ou d'une rangée de filtres ne venant pas d'être nettoyée même si le troisième élément filtrant partiellement recouvert ou la troisième rangée de filtres partiellement recouverte vient d'être nettoyé(e).
